# EUROPEAN PATENT SPECIFICATION

(11) **EP 2 601 759 B1**
(45) Date of publication and mention of the grant of the patent: **06.04.2016**
(21) Application number: 11754505.3
(22) Date of filing: 04.08.2011
(51) Int. Cl.: H04L 12/28, H04W 52/02, H04W 84/18

(54) **AUTOMATION SYSTEM**
AUTOMATIONSSYSTEM
SYSTÈME D'AUTOMATION

(30) Priority: 06.08.2010 IT VR20100168
(43) Date of publication of application: 12.06.2013
(60) Divisional application: 13183994.6
(73) Proprietor: Nice S.p.A., 31046 Oderzo (Treviso) (IT)
(72) Inventor: MARCHETTO, Oscar, I-31046 Oderzo - (TV) (IT); FERRON, Paolo, I-31046 Oderzo - (TV) (IT)
(74) Representative: Citron, Massimiliano
(86) International application number: PCT/IB2011/053488
(87) International publication number: WO 2012/017411

(56) References cited:
- US-A1- 2007 076 645
- US-A1- 2010 081 392
- US-A1- 2010 130 129

## Description

The invention relates to an automation system, with components adapted to coordinate the maneuver of e.g. sliding or swing gates, which we will refer to here as an example, doors or garage doors, shutters, blinds, curtains or blinds in general. The invention can generally be applied to all horizontal- or vertical-movement closing barriers (left-right), between two end-positions.

The systems to automate the movement of a gate are usually composed primarily of at least one electric motor to move the gate, a central control unit, plus safety components such as photocells and pressure sensitive edges, alarms (buzzers or flashers) and command and management interfaces for the user, such as keypads and/or displays.

The devices are generally connected to each other by several wirings, which carry power supply and control signals. The cable connection is widely used but is quite expensive to install. One has to lay pipes or ducts for the passage of the cables with their masonry; small excavations and restoration works are needed, and spending a lot of time in labor and materials is usual. The costs are very high, and so is the risk of errors in the connections.

In some models there exist hybrid solutions wherein some elements are battery powered and function by radio, e.g. pressure sensitive edges, digital keypads, transponder card readers, while in some case only the photocells are battery powered. The receiver photocells are still powered by cable and send control signals by cable mainly because of the power consumption: while the transmitting photocells can transmit even with pauses, for safety reasons the receiving ones must always be listening.

We add that there are specific regulations governing the intervention timing of the safety devices in the automation, such as photocells and sensitive edges. They have to ensure rapid response during the movement in the automation, therefore also the minimum times of transmission determine high consumption and collide with energy autonomy.

Other known systems with partially wireless architecture eliminate the wiring by replacing it with wireless links, but the network architecture remains the same as the wired systems, wherein each device is stored in a control unit by a coding set by mechanical selectors (jumpers or DIP switches).

US 2010/081392 discloses a radio-controlled home automation system. There are remote controllers interacting via a one-way radio channel with a receiving, operator unit.

US 2007/076645 refers to a signal repeater, used to extend the active receiving area of a receiver in an operator for moving a barrier.The main object of the invention is to provide an automation system for the automation of gates, doors or garage doors, or the like, which is cheap, quick to install and does not call for a laborious installation.

A further object is a system guaranteeing certain working autonomy for several years,

A further object is that the system be reliable and immune to disturbances.

A further object is that the system have good response speed to the user's commands even guaranteeing long working autonomy.

These objects are achieved by methods and devices to implement them as in the appended claims.

Features and advantages of the invention will be more evident by the exemplary description of an automation system, together with the attached drawing in which:
Figure 1 shows a block diagram of a system according to the invention;
Figure 2 shows a timeline of the system of Fig. 1 in a non-maneuver state (door still);
Figure 3 shows a timeline of the system of Fig. 1 in a state of maneuver (moving door);
Figure 4 shows a timeline of the system of Fig. 1 in a condition of end maneuver (no movement).

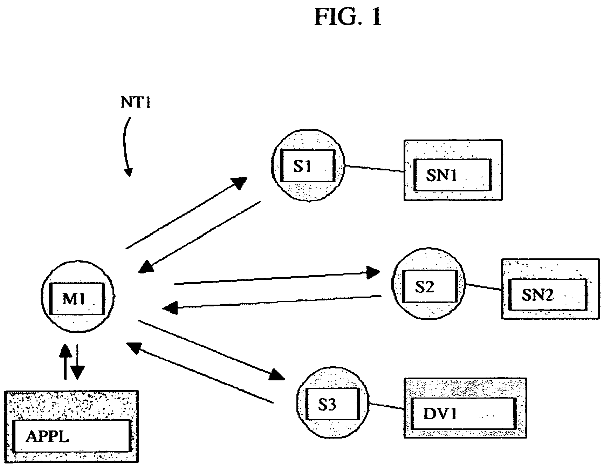

A home automation system according to the invention composed of traditional components is shown in Figure 1.

One of the possible configurations of the network is star structure, with a Master node that forms the star center. See Figure 1, which shows schematically a network NT1 that adopts the known Master/Slave transmission technique, with the star center that serves as the Master node M1, and peripheral nodes that act as Slave nodes, indicated with S1, S2, etc. All nodes, Master and Slave, can be completely integrated in the same component (electronic central units also integrated in the gearmotor, photocells, sensitive edges, flashing lights, card readers, keyboards, etc.) or can be made into a separate body and then associated. The network NT1 exhibits an electronic control unit as the Master node M1 and at least one photocell or similar as peripheral devices or Slave nodes S1, S2, etc.

Each Slave has no cable connection with the outer world, and is equipped with a power-supply battery, preferably self-rechargeable by a solar module. It is understood that due to the wireless connection of each Slave, it is very easy to place it in the environment without great building modifications and in short time.

Both the Master M1 and the Slaves S1, S2, etc. are each equipped with a microcontroller and a radio transmitter, not shown. The aim is to let the Master and the Slaves send and receive from/to each other coded control radio signals and data, indicated symbolically by the bi-directional arrows in Figure 1. When we will describe below the operations performed by a Master or a Slave by attributing them for the sake of brevity directly to one of the two, we tacitly mean that the respective microcontroller executes program instructions and/or drives means or hardware devices adapted to perform the operation and/or the radio transmitter is controlled and/or the received signal is processed in order to perform these operations.

As it can be seen a Master M1 communicates with the Slaves S1, S2, which can act as interfaces to sensors SN1, SN2, etc. or other devices DV1, DV2, etc. The Master M1 can also communicate with an application block APPL. For reasons of compatibility with existing control units the Master node M1 can be connected to a control unit through the bus line, as an interface, making the pre-existing control unit (the application APPL) believe that the installed peripheral devices are devices connected by cable to the bus. This solution enables the creation of hybrid automations with cable and/or wireless devices. It will be indeed possible, by inserting into the bus the Master M1 interface, to add wireless members to already existing wired automations.

When the network is initialized and operational it can work in two states: state of non-maneuver (door stopped or mode called SLEEP-mode) or in a state of maneuver (moving door).

### NON-MANEUVER STATE

In percentage, in terms of time, the network NT1 works more in a mode of non-maneuver, i.e. with the barrier/door stopped.

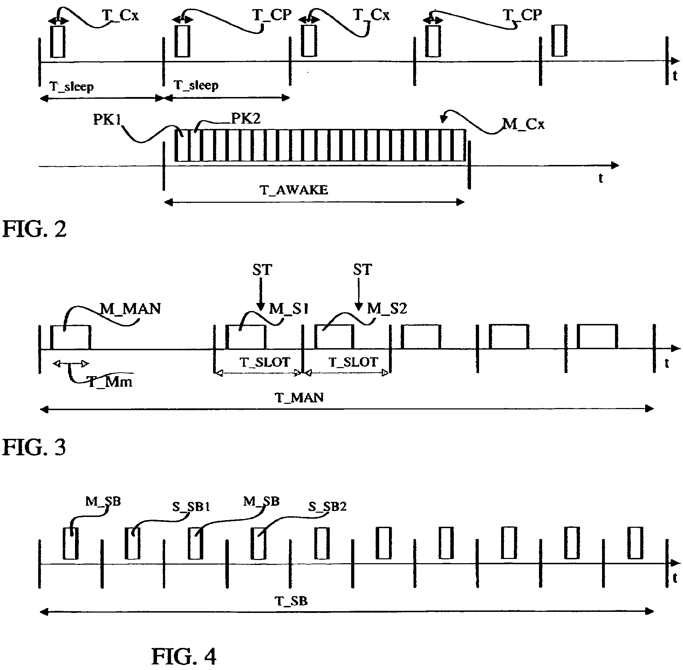

In non-maneuver the Master is inactive because it does not transmit to the Slaves, or it transmits with a very long period, while all the Slave nodes are in sleep mode, which is a WOR (wake-on-radio) low-power mode. See Fig. 2.

Each Slave is listening on a radio listening-time window for equal times T_CX and T_CP to verify the presence respectively of an activating signal M_Cx from the Master on a predefined channel CP or a channel Cx used in the previous maneuver. The times T_CP and T_CX are the time windows in which the Slave is listening. During the time that span between a listening and another, the Slave is in stand-by, and saves energy (all components are off except for an internal timer).

The use of several channels makes the system more robust: in fact, the Master at his discretion may choose which of the channels is to be used in the next maneuver. The channel CP, which is preferably fixed and determined at the factory, never changes throughout the life of the system, and serves as recovery channel and emergency channel to allow the Master node to try awakening the Slaves when it does not know if all of them are listening on the same channel or if the last channel Cx is disturbed. The channel Cx actually used in transreceiving is variable, and results the one chosen by the Master maneuver by maneuver (according to established signal quality criteria) because less disturbed.

Preferably nearly 14 distinct channels can be used for the 868 MHz band, between which the Cx channel is chosen.

The periods T_Cx and T_CP are equal, e.g. 300 µs, and repeat with a period T_sleep of e.g. 500 ms. Therefore the duty cycle (or working cycle) of the radio receiver is 0.3/500 = 0.0006. Such a low value, which is seen experimentally to ensure accurate detection of a signal from the Master, ensures a very high battery life, which cannot be reached if the Slaves were always listening to a radio channel. Obviously, the duty cycle can be varied according to specific application needs.

The Slaves remain in the condition described (SLEEP-mode) until they detect the signal M_Cx coming from/sent by the Master.

The Master can tranceive signals and data with other Masters of near networks, to exchange useful information for the managing and optimization of the network (e.g. the Masters can exchange the list of 14 channels used, the characteristics thereof and specify the channels used during transmission).

An additional, but no less important, reason for using the SLEEP-mode is to limit the number of transmissions. The system must respect the Regulations in the 868 MHz band with respect to "Non-specific Short Range Device, SRD", which limits the maximum transmission time called Duty-Cycle. The minimum value is 0.1%, which is the ratio, on average, between the transmission time and the time wherein no transmission occurs in a hour.

### MANEUVER STATE

The state of maneuver is composed by the following phases:
- selecting phase of the channel to be used by the Master;
- awakening phase of the Slaves;
- phase of maneuver;
- phase of end maneuver.

To awake all the Slaves the Master analyzes all the available channels, updating a statistical "channel quality" table determined by quality or S/N ratio factors. On the basis of the statistical table the Master selects the best actual channel, and the best between the channel CP and the channel Cx used in the previous maneuver. Such a channel is the one the Slaves are tuned on for listening during the whole non-maneuver state (still door).

Then the Master sends a "wake-up" command to the Slaves on a channel chosen between Cp and Cx used in the previous maneuver. Now the Slaves are ready to start the maneuver.

On the other hand, the channel CP is used as an emergency channel, i.e. probably very scarcely. Therefore, during the non-maneuver it has low probability of collision (interference from other transmitters).

All this prevents the Master and the Slave of a network from tuning on channels engaged by other networks, and improves the overall signal/noise ratio of transmissions in the network.

When the Master, which encompasses the entire decisional intelligence of the system, receives a maneuver command from a user, through e.g. a remote control or a correct password or a combination of access from a keypad, it begins to prepare the network NT1 to execute the maneuver required. E.g. it can be required to open a gate through activation and control of a motor.

To bring the Slaves in active state and out of the low-power state, the Master - see Fig. 3-transmits on the selected channel Cx or Cp. For simplicity we establish the use of the channel Cx. The Master then transmits a message or data signal M_Cx with duration T_AWAKE greater than 2 * T_SLEEP (T_Cx or T_Cp), e.g. 1010 ms. In this way each Slave surely receives the message M_Cx.

The message M_Cx contains packets PK1, PK2, etc. with service information for the Slaves, including the new channel to be actually used during the maneuver (see previous paragraph).

The message M_Cx is broadcast and necessarily received by all the Slaves, or during the window T_Cx or T_CP. The message M_Cx contains the address of the Master, which is implicitly the network address, consisting of sub-messages numbered PK1, PK2, ... PKn which are in temporal succession. When a Slave in SLEEP-state receives a packet PKn, since the total number of packets PK is known in advance, it knows the future transmission timing of the Master, and thus stops the listening turning off the transceiver to reduce consumption until the end of the message M_Cx.

The packets PKn of M_Cx are numbered sequentially, thus by knowing both the total number of packets PKn and how long (fixed total length of time) a single packet PK is, the Slave has all the data to know how much it will have to wait before the message M_Cx is concluded. In other words, the forwarding frequency of the PKn messages broadcast from the Master to the Slave is fixed and does not change. So the Slaves, once they have received an initial packet PK, remain synchronized to the Master because they know when (how much time after) the next message M_Cx (or M_CP) will arrive. During the waiting the Slave is not listening, then the energy consumption is lower. Each packet PKn always contains the same information repeated n times and each Slave can intercept any one of the packets. There are synchronized packets, uniquely assigned to each Slave.

It can happen that the Master sends the message M_Cx on the fixed channel CP, when, finished the preceding maneuver, the Master during the acknowledge/polling phase has not detected all the components installed or if the channel Cx, when choosing the channel, is disturbed.

At this point the entire network NT1 is active, ready to communicate on the channel selected by the Master.

If a Slave does not wake up then the Master will not know his status. If this Slave performs security functions needed to the maneuver, it is the central control unit (connected to the Master) or the Master which prevent the maneuver. If the Slave has no security functions, e.g. is a flashing light, the operation continues in any case.

Having obtained the preparation and the awakening of all the Slaves, the Master forwards a message M_MAN, unique for all the Slaves, for example with a period T_MAN of 50 ms (experimental data) (see Fig. 3). The message M_MAN contains instructions and commands for all Slaves, and each Slave decodes its own dedicated part.

The message M_MAN, with a duration T_Mm lasting about 1.5 ms in a slot of about 10 ms, is a packet in which there is the network address and the data/command part directed to each type of Slave. During the maneuver the message M_MAN requires only the state of the safety devices.

After the message M_MAN, each Slave containing a safety device sequentially responds with the respective messages M_S1, M_S2, etc. The Slaves that are not safety devices (e.g. a flasher or a keypad) do not transmit to the Master, but in any case receive and process the message M_MAN.

Preferably the response time to the Master for each Slave is defined by dividing a fraction of T_MAN in a number of same parts equal to the number of Slaves (called slot ST of duration T_SLOT). Such partition of the time into slots ST, made by the Master and communicated to the Slave at the end of the initialization/configuration of the network, occurs dynamically depending on the number of Slaves in the network NT1. E.g. if one has at disposal 50-10 = 40 ms, and there are two Slaves then T_SLOT will be of 20 ms; if there are ten Slaves each slot will be of 2 ms. In Fig. 3 is presented the case of five Slaves.

Thus, the division of time is similar to the deterministic case, with the difference that each Slave has at disposal more than the time strictly necessary to allow a MAC of type CSMA (Carrier Sense/Listen Before Talk) inside each slot ST.

Experimentally and advantageously it has been found that the responses of the Slaves (M_S1, M_S2,......) to the message M_MAN of the Master can be "suspended". In fact, during the maneuver (door movement), the Slave does not send a reply for each message of the Master but responds, for example, once out of ten received messages. This occurs only when the maneuver proceeds without problems, otherwise the Slave transmits a response to each message of the Master. This behavior allows an energy saving of the Slave and less network traffic.

The signal M_MAN contains a flag of "activated maneuver", which is received by all the Slaves, and serves as a synchronization signal for the answers M_Sn, and contains for each Slave the indication of what data has to be returned to the Master.

The responses M_Sn of the n Slaves in fact contain an identification code of the transmitting Slave, the data or information requested by the Master, e.g. the state of a photocell or a sensitive edge, or an identification of the Master and/or of their own network, so that another Master of a near network will not confuse for its own the Slave of others. The Master in the packets M_Sn can distinguish not only the identification of the Slave, to verify the membership to the network NT1 by comparison with a table of Slaves populated at the initialization phase, but also its own code of Master, as a further confirmation.

So, with period T_MAN the Master perfectly knows the status of each Slaves (of his), and ultimately the status of the network NT1, and then of the automation system.

The Master can directly control a motor that moves the movable barrier, or it can be an interface between a wired bus of the automation and the wireless network NT1. The Master can be integrated in the central unit or implemented as an additional element to be added to existing central units through the bus connection, and therefore it becomes an indirect control. Through the bus the Master can provide to the central unit the data supplied by radio by the Slave, and then the central unit controls the motor using the data provided by the wireless sensors. The Master interface can be installed on any control unit already existing with the bus.

The motor is activated after the first dispatch of message M_MAN and relative positive confirmation of the Slaves.

The plot shown in Fig. 3 is repeated periodically throughout the time required to the maneuver.

The Master at each dispatch of M_MAN preferably does a Carrier Sense (listen before talk). Essentially, the Master listens on the selected channel and evaluates the quality of the channel. There could be e.g. noise or interference due to transmission of elements from other networks. If the channel is free, the Master transmits the signal M_MAN, otherwise it waits for a random time, e.g. 500 us. After a couple of unsuccessful attempts for a favorable channel, the Master will transmit on the selected channel at the maximum available power, so the transmitted signal will go over disturbances or interference reaching the Slaves.

In each slot ST, every Slave preferably does a Carrier Sense. In case of disturbed channel the Slave waits for its own transmission turn during the next period T_MAN. If after a few periods T_MAN that Slave has not been able to transmit the data to the Master, the latter (or the central control unit) for safety stops the movable barrier. The time shift due to the Carrier-Sense is one of the parameters involved in evaluating the quality of the channel. Obviously if a shift gets noticed, this means that the channel at that moment is disturbed resulting in a negative evaluation of the respective channel. Advantageously, when the dialogue between Master and Slave is not successful because the chosen channel Cx is disturbed, it is possible to use another channel, e.g. CP.

Since during maneuvering the Master knows the presence and the state only of the safety devices (the non-safety Slaves during the maneuver only receive the orders from the Master but do not answer), at the end of the maneuver the Master begins a procedure of "polling" of its own devices.

The procedure steps in this mode are, for example. the following. The Master sends in the message M_MAN a stoplstill command, to warn all the Slaves. The Slaves will then prepare for the next end-of-the-maneuver phase, quickly turning on the radio receiver waiting for the next message M_SB from the Master (Fig. 4). The message M_SB is not broadcast-type but is addressed uniquely to each Slave, according to the Slave table created by the Master during the installation phase. So the messages M_SB will be n as the n Slaves, indicated with M_SBn. When a Slave receives its own message M_SB1, M_SB2, ..., to indicate its active state it responds with its own respective message S_SB1, S_SB2, etc.... (Fig. 4). The message M_SBn can contain instructions of different nature, for example a command for sending the state or returning into low-power mode. The packet M_SB and S_SBn takes about 1.5 ms.

In the event that a Slave does not respond to successive attempts by the Master, the Master signals by signaling means (e.g. a buzzer or LED lights.) the malfunctioning of the system or some possible anomaly.

The frame of Fig. 4 is then repeated with a period T_SB (set in factory, for example 500 ms). Since each Slave knows, thanks to the indexing built previously, the time distance from the first signal M_SB that the packet destined to it will occupy not to overlap with other Slaves, to consume little it can turn on its receiver only when needed, in proximity of the packet M_SB. That is, the Slave knows when the signal M_SB destined for it arrives: once the first packet M_SB is received, each Slave stays synchronized because it is known that the next packet M_SB will arrive after a time T_SB.

The Master places an information in the messages M_SB and commands across the whole network the SLEEP-mode. When all the Slaves installed on the network respond with the message M_SB or if a timer reaches zero, then the network returns to sleep-mode with low consumption.

## Claims

1. Method for linking between each other the components of a home automation system networked with each other and adapted to coordinate and supervise for safety the operation of a movable barrier such as sliding gates, hinged doors, garage doors, shutters, blinds or curtains, wherein
the network (NT1) exhibits an electronic control unit as a Master node (M1) and at least one component as a Slave node (S1, S2) and
for all the components and the control unit, a bidirectional network, which is only wireless, is used,
and during a state of inactive barrier the components operate in a low-power mode in which they alternate their state of listening or not-listening during periodic time windows of low duty-cycle in which to receive a signal from the control unit,
**characterized in that**
during the displacement of the movable barrier the control unit sends a periodic signal and the components sequentially answer within assigned and mutually exclusive time windows.
and the control unit, after the maneuvering of the movable barrier is finished, sends to the components a command to switch them into the low-power mode.

2. Method according to claim 1, wherein the components alternate their listening or not-listening state according to commands coming from a timer.

3. Method according to claim 1 or 2, wherein when the components have received a data packet contained in a part of said signal they turn off a receiver of theirs until the end of said signal.

4. Method according to any one of claims 1 to 3, wherein the assigned time window is assigned and communicated to the components by the control unit during an installation/configuration phase and has a duration/width inversely proportional to the number of components that make up the network.

5. Method according to one claim 1 to 4, wherein the commands/signals sent by the control unit have duration which is constant and longer than the period of said low duty-cycle periodic time windows.

6. Method according to one claim 1 to 5, wherein the components are listening alternately to receive a signal from the control unit at least on two channels.

7. Method according to one claim 3 to 6, wherein during the movement of the barrier the components send a response to the control unit only after having received interrogation signals.

8. Method according to any one of the preceding claims, wherein during the displacement of the movable barrier a component does not respond to the control unit for each message of the latter when the maneuver proceeds without problems.

9. Home automation system formed by multiple components and a control unit bidirectionally network-connected between each other and adapted to coordinate and supervise for safety the maneuver of a movable barrier such as sliding or hinged gates, doors or garage doors, awnings, blinds, or curtains,
wherein the network that connects all the components to the control unit is wireless and exhibits an electronic control unit as a Master node (M1) and at least one component as a Slave node (S1, S2),
**characterized in that**
during a state of inactive barrier the components are adapted to operate in a low-power mode in which they alternate their state of listening or not-listening during periodic time windows of low duty-cycle in which to receive a signal from the control unit, and **in that**
during the displacement of the movable barrier the control unit is adapted
to send a periodic signal and the components sequentially are adapted to answer within assigned and mutually exclusive time windows,
and, after the maneuvering of the movable barrier is finished, to send to the components a command to switch them into the low-power mode.

10. System according to claim 9, wherein the components are adapted so that when they have received a data packet contained in a part of said signal they turn off a receiver of theirs until the end of said signal.

11. System according to claims 9 or 10, wherein the control unit is adapted to assign and communicate the assigned time window to the components during an installation/configuration phase and the assigned time window has a duration/width inversely proportional to the number of components that make up the network.

12. System according to any one of the preceding claims 9 to 11, wherein during the displacement of the movable barrier, a component is adapted to not respond to the control unit for each message of the latter when the maneuver proceeds without problems.

## Patentansprüche

1. Verfahren, um miteinander vernetzte Komponenten eines Haustechniksystems miteinander zu verbinden, und zur Steuerung einer fahrbaren Barriere wie z.B. Schiebetüren, Tore, Türen, Garagentore, Rollläden, Fensterläden oder Vorhänge zu koordinieren und/oder zu sichern, wobei
das Netz (NT1) über eine elektronische Steuereinheit als Master-Knoten (M1) und mindestens eine Komponente als Slave-Knoten (S1, S2) verfügt und
für alle Komponenten und die Steuereinheit ein ausschließlich Wireless bidirektionales Netz verwendet wird, und
im Zustand inaktiver Barriere die Komponenten im Stromsparmodus funktionieren, wobei sich der Zustand des Empfangs oder Nichtempfangs in periodischen Zeitfenstern von kurzer Einschaltdauer alterniert und von der Steuereinheit ein Signal erhalten wird,
**dadurch gekennzeichnet, dass**
die Steuereinheit beim Bewegen der fahrbaren Barriere ein periodisches Signal verschickt und die Komponenten nacheinander in zugewiesenen und sich gegenseitig ausschließenden Zeitfenstern antworten, und
die Steuereinheit einen Befehl an die Komponenten sendet, nachdem die Steuerung der fahrbaren Barriere beendet ist, um sie in den Stromsparmodus zu versetzen.

2. Verfahren nach Anspruch 1, wobei die Komponenten den Zustand des Empfangs oder Nichtempfangs entsprechend den Befehlen alternieren, die von einem Timer gegeben werden.

3. Verfahren nach Anspruch 1 oder 2, wobei die Komponenten, wenn sie ein Datenpaket erhalten haben, das in einem Teil des besagten Signals enthalten ist, ihren Empfänger ausschalten bis das besagte Signal beendet ist.

4. Verfahren nach einem der Ansprüche 1 bis 3, wobei die Komponenten der Steuereinheit in der Installations-/Konfigurationsphase das zugeordnete Zeitfenster zugeordnet und kommuniziert bekommen und umgekehrt proportionale Länge/Breite zur Anzahl der Komponenten haben, die das Netz bilden.

5. Verfahren entsprechend einem Anspruch von 1 bis 4, wobei die von der Steuereinheit gesendeten Befehle/Signale von konstanter Dauer und unter kurzer Einschaltdauer länger als besagtes Zeitfenster sind.

6. Verfahren nach einem Anspruch von 1 bis 5, wobei die Komponenten bei mindestens zwei Kanälen abwechselnd auf Empfang eines Signals von der Steuereinheit stehen.

7. Verfahren entsprechend einem Anspruch von 3 bis 6, wobei die Komponenten beim Bewegen der Barriere erst eine Reaktion an die Steuereinheit senden, nachdem Abfragesignale erhalten wurden.

8. Verfahren nach einer der vorhergehenden Ansprüche, wobei eine Komponente beim Bewegen der Barriere nicht bei jedem Signal der Steuereinheit an diese antwortet, wenn die Handlung ohne Probleme verläuft.

9. Das Haustechniksystem besteht aus mehreren miteinander vernetzten Komponenten und einer Steuereinheit und zur Steuerung einer fahrbaren Barriere wie z.B. Schiebetüren, Tore, Türen, Garagentore, Rollläden, Fensterläden oder Vorhänge zu koordinieren und/oder zu sichern,
wobei das Netz, welches alle Komponenten mit der Steuereinheit verbindet, wireless ist und eine elektronische Steuereinheit als Master-Knoten (M1) und mindestens eine Komponente als Slave-Knoten (S1, S2) enthält, und
**dadurch gekennzeichnet ist, dass**
die Komponenten im Zustand inaktiver Barriere im Stromsparmodus funktionieren können, wobei der Zustand des Empfangs oder Nichtempfangs in periodischen Zeitfenstern von kurzer Einschaltdauer alterniert, und ein Signal von der Steuereinheit erhalten wird, und **dadurch gekennzeichnet ist, dass**
die Steuereinheit beim Bewegen der fahrbaren Barriere
ein periodisches Signal senden kann und die Komponenten in einem zugewiesenen Zeitfenster nacheinander und gegenseitig ausschließend antworten können,
und nach beendeter Steuerung der fahrbaren Barriere, einen Befehl an die Komponenten sendet, um sie in den Stromsparmodus zu versetzen.

10. System nach Anspruch 9, wobei die Komponenten ausgerichtet sind, dass sie bei Erhalt eines Datenpakets, welches in einem Teil von besagtem Signal enthalten ist, den eigenen Empfänger bis zum besagten Signal ausschalten.

11. System nach Anspruch 9 oder 10, wobei die Steuereinheit Komponenten in der Installations-/Konfigurationsphase dem zugewiesenen Zeitfenster zuordnet und kommuniziert, und das zugewiesene Zeitfenster eine umgekehrt proportionale Dauer/Breite zur Anzahl der Komponenten hat, die das Netz bilden.

12. System nach einer der vorhergehenden Ansprüche 9 bis 11, wobei eine Komponente beim Bewegen der Barriere der Steuereinheit nicht auf jedes Signal der letzteren antwortet, wenn die Handlung ohne Probleme verläuft.

## Revendications

1. Méthode permettant de relier entre eux les composants d'un système domotique connectés en réseau et étant en mesure de coordonner et/ou sécuriser la manoeuvre d'une barrière mobile telle que, par exemple, celle des portails coulissants, des portes, des portails de garage, des volets, des stores ou des rideaux, dans laquelle
le réseau (NT1) présente une centrale électronique de contrôle comme noeud Maître (M1) et au moins un composant comme noeud Esclave (S1, S2), où
un réseau bidirectionnel uniquement sans fil est utilisé pour tous les composants et la centrale de contrôle, et où
les composants, lors d'un état d'inactivité de la barrière, fonctionnent selon un mode basse consommation au cours duquel ils alternent leur état d'écoute ou de non-écoute dans le cadre de fenêtres temporelles périodiques à faible temps de cycle où ils peuvent recevoir un signal de la centrale de contrôle,
**caractérisée par le fait que**
la centrale de contrôle, pendant le déplacement de la barrière mobile, envoie un signal périodique et les composants répondent de manière séquentielle dans le cadre de fenêtres temporelles attribuées et mutuellement exclusives, et **par le fait que**
la centrale de contrôle, après que la manoeuvre de la barrière mobile soit terminée, envoie un ordre aux composants pour les commuter en mode basse consommation.

2. Méthode selon la revendication 1, dans laquelle les composants alternent leur statut d'écoute ou de non-écoute en fonction des ordres provenant d'une minuterie.

3. Méthode selon la revendication 1 ou 2, dans laquelle les composants, lorsqu'ils ont reçu un paquet de données contenu dans une partie du signal en question, éteignent leur récepteur jusqu'à la fin de ce signal.

4. Méthode selon l'une quelconque des revendications 1 à 3, dans laquelle la fenêtre temporelle attribuée est attribuée et communiquée aux composants par la centrale de contrôle au cours d'une phase d'installation / configuration et a une durée / amplitude inversement proportionnelle au nombre de composants constituant le réseau.

5. Méthode selon l'une quelconque des revendications 1 à 4, dans laquelle les ordres / signaux envoyés par la centrale de contrôle ont une durée constante et supérieure à la période des fenêtres temporelles périodiques à faible temps de cycle.

6. Méthode selon l'une quelconque des revendications 1 à 5, dans laquelle les composants sont alternativement à l'écoute pour recevoir un signal de la centrale de contrôle sur au moins deux canaux.

7. Méthode selon l'une quelconque des revendications 3 à 6, dans laquelle les composants, au cours du mouvement de la barrière, n'envoient une réponse à la centrale de contrôle qu'après avoir reçu des signaux d'interrogation.

8. Méthode selon l'une quelconque des revendications précédentes, dans laquelle un composant, pendant le mouvement de la barrière, ne répond pas à la centrale de contrôle pour tout message provenant de cette dernière lorsque la manoeuvre se déroule sans problèmes.

9. Système domotique constitué de composants multiples et d'une centrale de contrôle connectés entre eux en réseau et en mesure de coordonner et sécuriser la manoeuvre d'une barrière mobile telle que, par exemple, celle des portails coulissants ou battants, des portes ou des portails de garage, des volets, des stores ou des rideaux,
dans lequel le réseau reliant tous les composants à la centrale de contrôle est sans fil et présente une centrale électronique de contrôle comme noeud Maître (M1) et au moins un composant comme noeud Esclave (S1, S2),
**caractérisé par le fait que**
les composants, lors d'un état d'inactivité de la barrière, sont capables de fonctionner selon un mode basse consommation au cours duquel ils alternent leur état d'écoute ou de non-écoute dans le cadre de fenêtres temporelles périodiques à faible temps de cycle où ils peuvent recevoir un signal de la centrale de contrôle, et **par le fait que**
pendant le déplacement de la barrière mobile, la centrale de contrôle est en mesure
d'envoyer un signal périodique et les composants sont capables de répondre de manière séquentielle dans le cadre de fenêtres temporelles attribuées à ces derniers et mutuellement exclusives,
et **par le fait que** la centrale de contrôle, après que la manoeuvre de la barrière mobile soit terminée, est en mesure d'envoyer un ordre aux composants pour les commuter en mode basse consommation.

10. Système selon la revendication 9, dans lequel les composants sont adaptés de telle manière que, lorsqu'ils ont reçu un paquet de données contenu dans une partie du signal en question, ils éteignent leur récepteur jusqu'à la fin de ce signal.

11. Système selon la revendication 9 ou 10, dans lequel la centrale de contrôle est en mesure d'attribuer et de communiquer aux composants la fenêtre temporelle qui leur a été attribuée au cours d'une phase d'installation / configuration et dans lequel la fenêtre temporelle attribuée a une durée / amplitude inversement proportionnelle au nombre de composants constituant le réseau.

12. Système selon l'une quelconque des revendications 9 à 11 précédentes, dans lequel un composant, pendant le mouvement de la barrière, est capable de ne pas répondre à la centrale de contrôle pour tout message provenant de cette dernière lorsque la manoeuvre se déroule sans problèmes.
